# EUROPÄISCHE PATENTANMELDUNG

(11) **EP 3 254 794 A1**
(43) Veröffentlichungstag der Anmeldung: **13.12.2017**
(21) Anmeldenummer: 17170368.9
(22) Anmeldetag: 10.05.2017
(51) Int. Cl.: B23K 9/32, B23K 9/167, C09J 5/06

(54) **WÄRMEKOPFAUFSATZ, SYSTEM UND VERFAHREN ZUM LÖSEN EINER KLEBEVERBINDUNG ZWISCHEN BAUTEILEN**

(30) Priorität: 12.05.2016 DE 102016108844
(71) Anmelder: EWM AG, 56271 Mündersbach (DE)
(72) Erfinder: SZCZESNY, Michael, 56271 Mündersbach (DE)
(74) Vertreter: Cohausz & Florack

(57) **Zusammenfassung**

Die Erfindung betrifft einen Wärmekopfaufsatz (2) für einen Lichtbogenschweißbrenner (4), insbesondere für einen WIG-Schweißbrenner, zum Lösen einer Klebeverbindung (88) zwischen Bauteilen (52, 84), mit einem Aufsatzkörper (20), wobei der Aufsatzkörper (20) eine Aufnahme (28) aufweist, die dazu eingerichtet ist, den Kopf (34) eines Lichtbogenschweißbrenners (4) derart aufzunehmen, dass zwischen der Elektrode (38) des Lichtbogenschweißbrenners (4) und einem elektrisch leitfähigen Bereich (40) des Aufsatzkörpers (20) ein Lichtbogen (42) gezündet und aufrecht erhalten werden kann, und wobei der Aufsatzkörper (20) eine Kontaktfläche (50) zum Aufsetzen auf ein Bauteil (52) aufweist, die derart angeordnet ist, um von dem Lichtbogen (42) erzeugte Wärme über den Aufsatzkörper (20) auf das Bauteil (52) zu übertragen. Die Erfindung betrifft weiter ein System (6) sowie ein Verfahren zum Lösen einer Klebeverbindung (88) zwischen Bauteilen (52, 84).

## Beschreibung

Die Erfindung betrifft einen Wärmekopfaufsatz für einen Lichtbogenschweißbrenner, insbesondere für einen WIG-Schweißbrenner, zum Lösen einer Klebeverbindung zwischen Bauteilen. Die Erfindung betrifft weiterhin ein System und ein Verfahren zum Lösen einer Klebeverbindung zwischen Bauteilen.

Für Kraftfahrzeugkarosserien werden zum Teil Bauteilkomplexe aus mehreren übereinander angeordneten und miteinander verklebten Karosseriebauteilen verwendet. Zu diesem Zweck weisen die Karosseriebauteile typischerweise Flanschbereiche auf, in denen zwei benachbarte Karosseriebauteile durch eine Kleberschicht miteinander verbunden werden.

Da häufig nicht nur zwei, sondern drei oder sogar mehr Karosseriebauteile miteinander verbunden werden, weisen Bauteilkomplexe häufig Flanschbereiche mit mehr als zwei übereinander liegenden Karosseriebauteilen und entsprechend zwei oder mehr zwischen diesen angeordneten Kleberschichten auf.

Um einzelne, beispielsweise beschädigte Karosseriebauteile austauschen oder reparieren zu können, ist es wünschenswert, die Klebeverbindung, mit denen ein auszutauschendes Karosseriebauteil an anderen Bauteilen befestigt ist, gezielt zu lösen.

Aus dem Stand der Technik ist es bekannt, das auszutauschende Karosseriebauteil im Bereich einer Klebeverbindung von außen lokal zu erhitzen, beispielsweise durch einen Gasbrenner, um die Klebeverbindung zu lösen. Die dabei in den Bauteilkomplex eingebrachte Wärmeenergie ist jedoch nur schwer zu kontrollieren und kann dazu führen, dass die Bauteile des Bauteilkomplexes geschädigt werden.

Zudem ist das bekannte Verfahren problematisch, wenn mehr als zwei Karosseriebauteile miteinander verbunden sind, da durch die Hitzeeinwirkung des Gasbrenners neben der zu lösenden Kleberschicht häufig auch weiter darunter liegende Kleberschichten gelöst oder geschwächt werden können, mit denen andere Bauteile miteinander verbunden sind.

Aus der DE 10 2014 011472 A1 ist eine Vorrichtung zum Lösen einer Klebeverbindung zwischen Bauteilen bekannt, die ein erwärmbares Löseelement mit einer flüssigkeitsgekühlten Elektrode zum Erwärmen der Klebeverbindung und wenigstens einen Sensor zum Erfassen der Temperatur der Elektrode aufweist. Die Elektrode wird von einer Schweißstromquelle mit elektrischem Strom versorgt, so dass der elektrische Strom durch die Elektrode fließt und diese per ohmscher Erwärmung erwärmt. Mit dieser Vorrichtung ist ein gezielterer Wärmeeintrag in einen Bauteilkomplex möglich.

Vor diesem Hintergrund liegt der vorliegenden Erfindung die Aufgabe zu Grunde ein Vorrichtung zum Lösen einer Klebeverbindung zwischen Bauteilen zur Verfügung zu stellen, die gegenüber der aus dem Stand der Technik bekannten Vorrichtung zum Lösen einer Klebeverbindung effektiver und prozesssicherer ist.

Diese Aufgabe wird erfindungsgemäß gelöst durch einen Wärmekopfaufsatz für einen Lichtbogenschweißbrenner, insbesondere für einen WIG-Schweißbrenner, zum Lösen einer Klebeverbindung zwischen Bauteilen, mit einem Aufsatzkörper, wobei der Aufsatzkörper eine Aufnahme aufweist, die dazu eingerichtet ist, den Kopf eines Lichtbogenschweißbrenners derart aufzunehmen, dass zwischen der Elektrode des Lichtbogenschweißbrenners und einem elektrisch leitfähigen Bereich des Aufsatzkörpers ein Lichtbogen gezündet und aufrecht erhalten werden kann, und wobei der Aufsatzkörper eine Kontaktfläche zum Aufsetzen auf ein Bauteil aufweist, die derart angeordnet ist, um von dem Lichtbogen erzeugte Wärme über den Aufsatzkörper auf das Bauteil zu übertragen.

Es wurde erkannt, dass durch die Erwärmung des Aufsatzkörpers mittels eines Lichtbogens ein gezielterer Wärmeeintrag in eine zu lösende Klebeverbindung erreicht werden kann als bei einer ohmschen Erwärmung des Aufsatzkörpers. Dadurch dass die Vorrichtung zum Lösen einer Klebeverbindung zwischen Bauteilen als Wärmekopfaufsatz für einen Lichtbogenschweißbrenner ausgebildet ist, lässt sich ein normaler Lichtbogenschweißbrenner einfach zu einem Gerät zum Lösen von Klebeverbindungen zwischen Bauteilen umrüsten, indem der Wärmekopfaufsatz auf den Kopf des Lichtbogenschweißbrenners aufgesetzt wird. Zusätzliche Geräte zur Erzeugung eines Lichtbogens sind damit entbehrlich.

Der Wärmekopfaufsatz ist für einen Lichtbogenschweißbrenner, insbesondere für einen WIG-Schweißbrenner, vorgesehen. Dies bedeutet, dass der Wärmekopfaufsatz dazu ausgebildet ist, um auf den Kopf eines Lichtbogenschweißbrenners aufgesetzt werden zu können.

Der Wärmekopfaufsatz weist einen Aufsatzkörper auf. Bei dem Aufsatzkörper kann es sich beispielsweise um einen Metallblock, vorzugsweise aus Kupfer, handeln. Ein Metallblock ist elektrisch leitfähig und kann damit als Gegenelektrode für den Lichtbogen des Lichtbogenschweißbrenners wirken. Kupfer hat neben der hohen elektrischen Leitfähigkeit den Vorteil einer hohen thermischen Leitfähigkeit, so dass die vom Lichtbogen erzeugte Wärme effektiv auf ein Bauteil übertragen werden kann.

Der Aufsatzkörper weist eine Aufnahme auf, die dazu eingerichtet ist, den Kopf eines Lichtbogenschweißbrenners aufzunehmen. Unter dem Kopf (Brennerkopf) eines Lichtbogenschweißbrenners wird der Teil des Schweißbrenners verstanden, in dem die Elektrode zur Erzeugung des Lichtbogens endet. Die Aufnahme kann beispielsweise als im Wesentlichen zylindrische Ausnehmung im Aufsatzkörper ausgebildet sein, in die der Kopf eines Lichtbogenschweißbrenners einführbar ist. Vorzugsweise weist die Aufnahme einen Querschnitt von 10 bis 30 mm auf, um den Kopf am Markt üblicher Lichtbogenschweißbrenner aufzunehmen zu können.

Die Aufnahme ist dazu eingerichtet, den Kopf eines Lichtbogenschweißbrenners derart aufzunehmen, dass zwischen der Elektrode des Lichtbogenschweißbrenners und einem elektrisch leitfähigen Bereich des Aufsatzkörpers ein Lichtbogen gezündet und aufrecht erhalten werden kann. Zu diesem Zweck ist der Kopf eines Lichtbogenschweißbrenners insbesondere so weit in die Aufnahme einführbar, dass das Ende der Elektrode des Lichtbogenschweißbrenners einem elektrisch leitfähigen Bereich des Aufsatzkörpers gegenüberliegt, so dass zwischen der Elektrode und dem Aufsatzkörper ein Lichtbogen gezündet und aufrecht erhalten werden kann. Dieser Bereich des Aufsatzkörpers bildet dann die Gegenelektrode für den Lichtbogen.

Der elektrisch leitfähige Bereich des Aufsatzkörpers ist insbesondere mit der Stromquelle des Lichtbogenschweißbrenners elektrisch verbindbar, beispielsweise über eine Werkstückleitung, so dass der Lichtbogen aufrechterhalten werden kann. Insbesondere ist der elektrisch leitfähige Bereich des Aufsatzkörpers mit dem PlusPotential der Stromquelle verbindbar bzw. verbunden. Der die Gegenelektrode bildende elektrisch leitfähige Bereich des Aufsatzkörpers ist insbesondere in der Aufnahme angeordnet, so dass der Lichtbogen im Betrieb innerhalb der Aufnahme brennt.

Der Aufsatzkörper weist eine Kontaktfläche zum Aufsetzen auf ein Bauteil auf. Zu diesem Zweck ist die Kontaktfläche vorzugsweise eben. Die Kontaktfläche kann beispielsweise direkt auf ein Bauteil aufgesetzt werden oder auch indirekt mit einer dazwischen angeordneten, am Aufsatzkörper befestigten Verschleißplatte.

Die Kontaktfläche ist derart angeordnet, um von dem Lichtbogen erzeugte Wärme über den Aufsatzkörper auf das Bauteil zu übertragen. Vorzugsweise ist die Kontaktfläche an einer Seite des Aufsatzkörpers angeordnet, die der Seite des Aufsatzkörpers gegenüberliegt, von der der Kopf des Lichtbogenschweißbrenners in die Aufnahme einführbar ist. Dies erleichtert die Handhabung des Wärmekopfaufsatzes; insbesondere kann die Kontaktfläche mit dem Lichtbogenschweißbrenner auf diese Weise einfacher gegen ein Bauteil gedrückt werden.

Die oben genannte Aufgabe wird erfindungsgemäß weiterhin gelöst durch ein System zum Lösen einer Klebeverbindung zwischen Bauteilen, mit einem Lichtbogenschweißbrenner, insbesondere einem WIG-Brenner, und dem zuvor beschriebenen Wärmekopfaufsatz, der an den Lichtbogenschweißbrenner angepasst ist. Insbesondere ist der Wärmekopfaufsatz so an den Lichtbogenschweißbrenner angepasst, dass der Kopf des Lichtbogenschweißbrenners in die Aufnahme des Aufsatzkörpers eingeführt und in der Aufnahme derart angeordnet werden kann, dass zwischen der Elektrode des Lichtbogenschweißbrenners und einem elektrisch leitfähigen Bereich des Aufsatzkörpers ein Lichtbogen gezündet und aufrecht erhalten werden kann.

Die oben genannte Aufgabe wird weiterhin gelöst durch ein Verfahren zum Lösen einer Klebeverbindung zwischen Bauteilen mittels des zuvor beschriebenen Systems, bei dem der Kopf des Lichtbogenschweißbrenners in die Aufnahme des Aufsatzkörpers eingeführt wird, bei dem zwischen der Elektrode des Lichtbogenschweißbrenners und dem Aufsatzkörper ein Lichtbogen gezündet und aufrechterhalten wird und bei dem die Kontaktfläche mit einem ersten Bauteil, das mittels einer Kleberschicht mit einem zweiten Bauteil verklebt ist, in thermischen Kontakt gebracht wird, um die Klebeverbindung zu lösen.

Um den Lichtbogen erzeugen zu können, werden beide elektrischen Potentiale (Plus und Minus) von der Schweißstromquelle an den Wärmekopfaufsatz übertragen: Eines der Potentiale (insbesondere das Minus-Potential) liegt an der Elektrode des Lichtbogenschweißbrenners an und das andere Potential (insbesondere das PlusPotential) liegt an dem Aufsatzkörper bzw. einem als Gegenelektrode wirkenden elektrisch leitfähigen Bereich davon an. Auf diese Weise kann der Lichtbogen zwischen der nicht-abschmelzenden Elektrode des Lichtbogenschweißbrenners und dem als Gegenelektrode wirkenden Teil des Aufsatzkörpers brennen. Der Lichtbogen brennt insbesondere unter einer Schutzgas-Atmosphäre eines aus dem Lichtbogenschweißbrenner ausströmenden Schutzgases. Das Zünden des Lichtbogens kann beispielsweise mittels Hochfrequenz erfolgen, die zeitweise zwischen der Elektrode des Lichtbogenschweißbrenners und dem als Gegenelektrode wirkenden Teil des Aufsatzkörpers angelegt wird, oder durch kurzzeitiges Aufsetzen der Elektrode auf dem Aufsatzkörper mit anschließendem Abheben der Elektrode (sogenanntes Berührungszünden).

Durch den zwischen der Elektrode des Lichtbogenschweißbrenners und dem Aufsatzkörper brennenden Lichtbogen wird Wärme erzeugt, die über den Aufsatzkörper und die Kontaktfläche auf eine definierte Fläche in das erste Bauteil übertragen werden kann. Auf diese Weise ist ein gezielter Wärmeeintrag in ein verklebtes Bauteil möglich, wodurch eine Kleberschicht gelöst werden kann, ohne beispielsweise unterhalb der Kleberschicht angeordnete weitere Kleberschichten bzw. Bauteile zu schädigen.

Im Folgenden werden verschiedene Ausführungsformen des Wärmekopfaufsatzes, des Systems und des Verfahrens beschrieben, wobei die einzelnen Ausführungsformen jeweils sowohl für den Wärmekopfaufsatz und das System als auch für das Verfahren anwendbar sind und sich zudem untereinander kombinieren lassen.

Bei einer ersten Ausführungsform weist der Wärmekopfaufsatz Befestigungsmittel auf, die dazu eingerichtet sind, den Lichtbogenschweißbrenner in der Aufnahme zu fixieren. Bei einer entsprechenden Ausführungsform des Systems weisen der Wärmekopfaufsatz und/oder der Lichtbogenschweißbrenner Befestigungsmittel auf, die dazu eingerichtet sind, den Lichtbogenschweißbrenner in der Aufnahme zu fixieren. Bei einer entsprechenden Ausführungsform des Verfahrens wird der Wärmekopfaufsatz am Lichtbogenschweißbrenner mittels vorgesehener Befestigungsmittel befestigt.

Als Befestigungsmittel kann der Wärmekopfaufsatz beispielsweise eine zum Beispiel mit dem Aufsatzkörper verschraubte Befestigungsplatte aufweisen, die form-und/oder kraftschlüssig mit dem Lichtbogenschweißbrenner verbunden werden kann.

Mit den Befestigungsmitteln kann der Wärmekopfaufsatz mit dem Lichtbogenschweißbrenner fest verbunden werden, um Relativbewegungen zwischen dem Wärmekopfaufsatz und dem Lichtbogenschweißbrenner zu vermeiden. Die Befestigungsmittel sind insbesondere als lösbare Befestigungsmittel ausgebildet, so dass der Wärmekopfaufsatz für den Einsatz flexibel am Lichtbogenschweißbrenner montiert und von diesem demontiert werden kann.

Bei einer weiteren Ausführungsform des Systems ist der Kopf des Lichtbogenschweißbrenners derart in der Aufnahme des Aufsatzkörpers aufgenommen, dass zwischen der Elektrode des Lichtbogenschweißbrenners und einem elektrisch leitfähigen Bereich des Aufsatzkörpers ein Lichtbogen gezündet und aufrecht erhalten werden kann. In diesem Zustand ist der Wärmekopfaufsatz also auf dem Lichtbogenschweißbrenner montiert und das System damit einsatzbereit.

Bei einer weiteren Ausführungsform umfasst die Aufnahme eine sacklochartige Vertiefung im Aufsatzkörper, in die der Kopf des Lichtbogenschweißbrenners derart eintauchbar ist, dass der Lichtbogen im Betrieb innerhalb der sacklochartigen Vertiefung brennt. Auf diese Weise kann die vom Lichtbogen erzeugte UV-Strahlung seitlich abgeschirmt werden.

Unter einer sacklochartigen Vertiefung wird eine Vertiefung im Aufsatzkörper mit einem Vertiefungsgrund verstanden. Bei der sacklochartige Vertiefung kann es sich insbesondere um ein gebohrtes Sackloch handeln oder auch um eine auf eine andere Weise in den Aufsatzkörper eingebrachte Vertiefung in der Form eines Sacklochs. Bei einer weiteren Ausführungsform des Systems weist der Kopf des Lichtbogenschweißbrenners eine derart ausgebildete Schutzgasdüse auf, so dass, wenn der Kopf des Lichtbogenschweißbrenners in der Aufnahme des Aufsatzkörper aufgenommen ist, der Lichtbogen durch die Schutzgasdüse und den Aufsatzkörper nach außen abgeschirmt wird.

Die Schutzgasdüse dient zur Führung des Schutzgases für den Lichtbogen. Bei der zuvor beschrieben Ausführungsform sind die Schutzgasdüse und der Aufsatzkörper zudem so aneinander angepasst, dass die vom Lichtbogen erzeugte UV-Strahlung durch die Schutzgasdüse und den Aufsatzkörper nach außen abgeschirmt wird. Auf diese Weise ist eine praktisch vollständige Abschirmung des Lichtbogens nach außen möglich, so dass der Wärmekopfaufsatz bzw. das System ohne Schweißschutzbrille bedient werden kann. Bei der Schutzgasdüse kann es sich beispielsweise um eine Keramikdüse handeln.

Bei einer weiteren Ausführungsform weist der Aufsatzkörper mindestens einen Gasauslasskanal auf, mit dem Schutzgas des Lichtbogenschweißbrenners aus der Aufnahme bzw. aus der sacklochartigen Vertiefung nach außen abgeleitet werden kann. Auf diese Weise kann das aus dem Lichtbogenschweißbrenner austretende Schutzgas zuverlässig aus der Vertiefung herausgeführt werden. Dies erlaubt es insbesondere, die sacklochartige Vertiefung und den Kopf des Lichtbogenschweißbrenners, insbesondere die Gasdüse, so aneinander anzupassen, dass die sacklochartige Vertiefung durch den Kopf des Lichtbogenschweißbrenners nach oben abgedichtet wird, da das Schutzgas auf anderem Wege, aus der Vertiefung heraus gelangen kann. Dadurch kann die sacklochartige Vertiefung vollständig abgeschirmt werden, so dass ein Austritt der vom Lichtbogen erzeugten UV-Strahlung ausgeschlossen werden kann.

Bei einer weiteren Ausführungsform weist der Aufsatzkörper ein Kühlsystem zur aktiven Kühlung des Aufsatzkörpers auf. Durch die aktive Kühlung des Aufsatzkörpers lässt sich die Temperatur des Aufsatzkörpers besser einstellen bzw. regeln. Insbesondere dient das Kühlsystem als Wärmesenke zur Prozess- und Temperaturregelung des Aufsatzkörpers. Mit dem Kühlsystem kann zudem beim Abschalten des Lichtbogens ein schnelles Abkühlen des Lichtbogenschweißbrenners und/oder des Aufsatzkörpers erreicht werden.

Vorzugsweise weist der Aufsatzkörper einen Kühlmedieneinlass und einen Kühlmedienauslass für ein Kühlmedium sowie ein Kühlmedium-Leitungssystem auf, das den Kühlmedieneinlass mit dem Kühlmedienauslass durchströmbar verbindet. Dadurch ist eine effektive Kühlung des Aufsatzkörpers mittels eines durch den Aufsatzkörper strömenden Kühlmediums möglich. Bei dem Kühlmedium kann es sich vorzugsweise um ein flüssiges Kühlmedium, insbesondere Wasser oder Öl, handeln. Alternativ kann auch ein gasförmiges Kühlmedium verwendet werden, beispielsweise Luft oder Schutzgas, insbesondere das Schutzgas des Lichtbogenschweißbrenners.

Bei einer weiteren Ausführungsform ist das Kühlsystem, insbesondere das Kühlmedium-Leitungssystem, für eine indirekte Kühlung des Aufsatzkörpers eingerichtet. Unter einer indirekten Kühlung wird verstanden, dass die Kühlung im Betrieb nicht unmittelbar im Bereich des Lichtbogens erfolgt, sondern in einem davon getrennten Bereich. So weist der Aufsatzkörper vorzugsweise einen Kühlbereich auf, in dem das Kühlmedien-Leitungssystem angeordnet ist, und einen vom Kühlbereich getrennten Lichtbogenbereich, in dem im Betrieb der Lichtbogen zwischen der Elektrode des Lichtbogenschweißbrenners und dem Aufsatzkörper brennt, wobei der Kühlbereich und der Lichtbogenbereich thermisch gekoppelt sind. Auf diese Weise wird die Betriebssicherheit des Aufsatzkörpers erhöht, da eine übermäßige Erhitzung des Kühlmediums durch den Lichtbogen verhindert werden kann. Dies ist insbesondere bei einer Wasserkühlung vorteilhaft, da dadurch eine Wasserdampfbildung im Kühlmedien-Leitungssystem verhindert werden kann, die zum Bersten des Wärmekopfaufsatzes führen könnte.

Vorzugsweise ist zwischen dem Kühlbereich und dem Lichtbogenbereich eine Rippenstruktur vorgesehen. Auf diese Weise werden die Bereiche voneinander getrennt bei gleichzeitiger thermischer Kopplung über die Rippenstruktur. Die Rippenstruktur hat zudem die Vorteile eines reduzierten Materialaufwands und eines geringeren Gewichts.

Bei einer weiteren Ausführungsform des Systems weist der Lichtbogenschweißbrenner eine an dem Kühlmedieneinlass des Aufsatzkörpers anschließbare Kühlmedienzuleitung und eine an dem Kühlmedienauslass des Aufsatzkörpers anschließbare Kühlmedienabführung auf. Auf diese Weise kann das Kühlmedien-Leitungssystem über den Lichtbogenschweißbrenner mit einem Kühlmedium versorgt werden. Dies erleichtert die Handhabung des Systems, da keine separaten Kühlmedienleitungen erforderlich sind.

Die Kühlmedienzuleitung und die Kühlmedienabführung können beispielsweise entlang des Schlauchpakets oder im Schlauchpaket geführt werden, mit dem der Lichtbogenschweißbrenner mit der Schweißstromquelle verbunden ist.

Bei einer weiteren Ausführungsform des Systems weist der Lichtbogenschweißbrenner eine elektrische Leitung für die Gegenelektrode der Elektrode des Lichtbogenschweißbrenners auf. Insbesondere ist die elektrische Leitung mit dem elektrisch leitfähigen Bereich des Aufsatzkörpers elektrisch verbindbar oder verbunden. Ist der Aufsatzkörpers ein Metallblock, so kann die elektrische Leitung beispielsweise an einer Stelle mit dem Metallblock verbunden werden. Auf diese Weise kann der als Gegenelektrode wirkende Bereich des Aufsatzkörpers über den Lichtbogenschweißbrenner mit der Schweißstromquelle verbunden werden, so dass auf eine separate Leitung des Aufsatzkörpers verzichtet werden kann.

Vorzugsweise kann die Kühlwasserzuleitung oder die Kühlwasserabführung als elektrische Leitung für die Gegenelektrode eingerichtet sein. Die jeweils andere kann zudem als elektrische Leitung für die Elektrode eingerichtet sein. Die Kühlwasserzuleitung bzw. die Kühlwasserabführung sind zu diesem Zweck insbesondere als Strom-Wasser-Kabel ausgebildet. Auf diese Weise kann der Aufsatzkörper mit dem elektrischen Pol der Schweißstromquelle für die Gegenelektrode bzw. die Elektrode des Lichtbogenschweißbrenners mit dem elektrischen Pol der Schweißstromquelle für die Elektrode verbunden werden. Zusätzliche elektrische Leitungen für den Lichtbogenstrom sind damit entbehrlich.

Bei einer weiteren Ausführungsform umfasst das System weiterhin eine Steuerungseinrichtung, die dazu eingerichtet ist, den Lichtbogenstrom des Lichtbogenschweißbrenners zu steuern, insbesondere als Funktion einer Benutzereingabe an einer Benutzerschnittstelle. Insbesondere kann das System eine Schweißstromquelle umfassen, an die der Lichtbogenschweißbrenner anschließbar ist und in die die Steuerungseinrichtung integriert ist. Die Benutzerschnittstelle kann beispielsweise an der Schweißstromquelle, am Lichtbogenschweißbrenner oder am Wärmekopfaufsatz angeordnet sein. Über den Lichtbogenstrom kann die Wärmeleistung des Lichtbogens gesteuert werden. Je höher der Lichtbogenstrom ist, desto größer ist die Wärmeleistung des Lichtbogens und umgekehrt. Auf diese Weise kann von der Steuerungseinrichtung die Temperatur des Aufsatzkörpers an der Kontaktfläche gesteuert werden.

Unter einer Benutzerschnittstelle wird eine Komponente verstanden, über die eine Benutzereingabe und/oder eine Benutzerausgabe möglich sind. Für eine Benutzereingabe kann eine Benutzerschnittstelle beispielsweise ein oder mehrere Tasten aufweisen. Für eine Benutzerausgabe kann eine Benutzerschnittstelle beispielsweise ein oder mehrere Leuchtdioden oder einen Bildschirm aufweisen.

Bei einer weiteren Ausführungsform ist in den Wärmekopfaufsatz, vorzugsweise in den Aufsatzkörper, insbesondere im Bereich der Kontaktfläche, ein Temperatursensor integriert. Bei dem Temperatursensor kann es sich beispielsweise um einen Pt1000-Sensor handeln. Am Lichtbogenschweißbrenner ist vorzugsweise eine Signalleitung für den Temperatursensor vorgesehen, so dass das Messsignal des Temperatursensors an die Steuerungseinrichtung übermittelt werden kann. Mit dem Temperatursensor kann die Temperatur des Aufsatzkörpers im Bereich der Kontaktfläche überwacht werden.

Beispielsweise kann der Lichtbogenschweißbrenner, die Steuerungseinrichtung oder der Wärmekopfaufsatz eine Benutzerschnittstelle aufweisen, die dazu eingerichtet ist, abhängig von der über den Temperatursensor gemessenen Temperatur eine Benutzeranzeige auszugeben, beispielsweise einen Wert für die Temperatur im Bereich der Kontaktfläche. Auf diese Weise kann der Benutzer des Systems die Temperatur an der Kontaktfläche überwachen.

Bei einer weiteren Ausführungsform des Systems ist die Steuerungseinrichtung dazu eingerichtet, die Temperatur des Aufsatzkörpers, insbesondere im Bereich der Kontaktfläche, zu regeln, vorzugsweise auf eine Temperatur im Bereich zwischen 100 °C und 700 °C, weiter bevorzugt zwischen 300 °C und 500 °C. Zu diesem Zweck ist die Steuerungseinrichtung insbesondere dazu eingerichtet, den Lichtbogenschweißstrom abhängig von einem mittels eines in den Wärmekopfaufsatz integrierten Temperatursensors gemessenen Temperaturwert zu steuern. Der über den Temperatursensor gemessene Temperaturwert dient also als Regelgröße und der Schweißstrom als Steuergröße des Regelkreises. Alternativ oder zusätzlich kann auch ein Parameter eines vorgesehenen Kühlsystems, beispielsweise der Volumenstrom eines Kühlmediums durch ein Kühlmedien-Leitungssystem oder die Kühlmedientemperatur, als Steuergröße des Regelkreises verwendet werden.

Die Steuerungseinrichtung ist also vorzugsweise als Temperaturregelung eingerichtet. Insbesondere kann die Schweißstromquelle mit dieser Temperaturregelung ausgestattet sein. Auf diese Weise kann die Temperatur des Aufsatzkörpers an der Kontaktfläche automatisch geregelt werden, so dass sich an der Kontaktfläche zuverlässig eine gewünschte Temperatur oder ein gewünschter Temperaturverlauf einstellen lässt. Dadurch kann insbesondere der Wärmeeintrag vom Aufsatzkörper in ein verklebtes Bauteil derart eingestellt werden, dass sich eine erste Kleberschicht gezielt lösen lässt, ohne darunterliegende weitere Kleberschichten oder Bauteile zu schädigen. Bevorzugt ist eine Regelung der Temperatur im Bereich der Kontaktfläche im Bereich um 400 °C, beispielsweise im Bereich von 350 bis 450 °C. Dieser Temperaturbereich ist besonders geeignet, um typische Kleberschichten zu lösen.

Bei der Temperaturregelung wird die Ist-Temperatur im Bereich der Kontaktfläche insbesondere über einen Temperatursensor im Wärmeaufsatzkopf erfasst und über den Lichtbogen-Strom geregelt. Die Regelung der Temperatur des Wärmeaufsatzkopfes erfolgt insbesondere über einen Soll/Istwert-Vergleich der Temperatur. In Abhängigkeit von diesem Soll/Istwert-Vergleich wird der Lichtbogenstrom derart verändert, dass die Temperatur konstant gehalten wird.

Bei einer weiteren Ausführungsform des Systems ist die Steuerungseinrichtung dazu eingerichtet, die Temperatur des Aufsatzkörpers, insbesondere im Bereich der Kontaktfläche, entsprechend eines Temperaturverlaufsprogramms zu regeln. Unter einem Temperaturverlaufsprogramm wird ein vorgegebener Temperaturverlauf über die Zeit verstanden.

Vorzugsweise umfasst das System eine Benutzerschnittstelle, über die ein Benutzer eine gewünschte Soll-Temperatur einstellen bzw. auswählen kann, beispielsweise in einem Temperatur-Einstellbereich von 100 bis 700 °C. Alternativ oder zusätzlich kann die Benutzerschnittstelle auch dazu eingerichtet sein, dass der Benutzer ein Soll-Temperaturverlaufsprogramm einstellen bzw. auswählen kann. Die Temperaturregelung erfolgt dann insbesondere auf Grundlage der eingestellten Soll-Temperatur bzw. des ausgewählten Soll-Temperaturverlaufsprogramms.

Die Benutzerschnittstelle kann insbesondere an der Schweißstromquelle, am Lichtbogenschweißbrenner oder am Wärmekopfaufsatz angeordnet sein. Alternativ kann auch eine externe Benutzerschnittstelle vorgesehen sein, die beispielsweise über ein Datenkabel an der Schweißstromquelle angeschlossen sein kann.

Vorzugsweise weist die Steuereinrichtung einen Speicher auf, auf dem für verschiedene verklebte Bauteile, z.B. Karosseriebauteile, verschiedene Soll-Temperaturen und/oder Soll-Temperaturverlaufsprogramme hinterlegt sind. Über die Benutzerschnittstelle kann der Benutzer dann die gewünschte Soll-Temperatur bzw. das gewünschte Soll-Temperaturverlaufsprogramm abrufen.

Für eine einfache Bedienbarkeit ist vorzugsweise am Wärmekopfaufsatz oder am Lichtbogenschweißbrenner eine Benutzerschnittstelle angeordnet mit einer Anzeige, über die der Soll- und Ist-Wert für die Temperatur des Aufsatzkörpers angezeigt werden können, und mit Einstellorganen, über die die Soll-Temperatur eingestellt und/oder Bauteil-spezifische Soll-Temperaturen oder Soll-Temperaturverlaufsprogramme abrufbar sind.

Bei einer weiteren Ausführungsform weist der Aufsatzkörper an der Kontaktfläche Montagemittel, beispielsweise Gewindebohrungen, zur Montage einer auswechselbaren Verschleißplatte auf. Auf diese Weise kann eine Verschleißplatte an der Kontaktfläche montiert werden, so dass beim Aufsetzen auf ein Bauteil nur die Verschleißplatte in direkten Kontakt mit dem Bauteil kommt. Die durch den Bauteilkontakt dem Verschleiß ausgesetzte Verschleißplatte kann dann von Zeit zu Zeit ausgewechselt werden. Auf diese Weise wird der Verschleiß des Aufsatzkörpers reduziert und damit die Lebensdauer des Wärmekopfaufsatzes verlängert.

Im Folgenden werden noch weitere Ausführungsformen 1 bis 9 des Wärmekopfaufsatzes, weitere Ausführungsformen 10 bis 17 des Systems und eine weitere Ausführungsform 18 des Verfahrens beschrieben. Die Ausführungsformen sind sowohl untereinander als auch mit den zuvor beschriebenen Ausführungsformen kombinierbar.
1. Wärmekopfaufsatz für einen Lichtbogenschweißbrenner, insbesondere für einen WIG-Schweißbrenner, zum Lösen einer Klebeverbindung zwischen Bauteilen, mit einem Aufsatzkörper, wobei der Aufsatzkörper eine Aufnahme aufweist, die dazu eingerichtet ist, den Kopf eines Lichtbogenschweißbrenners derart aufzunehmen, dass zwischen der Elektrode des Lichtbogenschweißbrenners und einem elektrisch leitfähigen Bereich des Aufsatzkörpers ein Lichtbogen gezündet und aufrecht erhalten werden kann, und wobei der Aufsatzkörper eine Kontaktfläche zum Aufsetzen auf ein Bauteil aufweist, die derart angeordnet ist, um von dem Lichtbogen erzeugte Wärme über den Aufsatzkörper auf das Bauteil zu übertragen.
2. Wärmekopfaufsatz nach Ausführungsform 1, wobei der Aufsatzkörper als Metallblock, insbesondere aus Kupfer, ausgebildet ist.
3. Wärmelcopfaufsatz nach Ausführungsform 1 oder 2, wobei der Wärmekopfaufsatz Befestigungsmittel aufweist, die dazu eingerichtet sind, den Lichtbogenschweißbrenner in der Aufnahme des Aufsatzkörpers zu fixieren.
4. Wärmekopfaufsatz nach einer der Ausführungsformen 1 bis 3, wobei die Aufnahme eine sacklochartige Vertiefung im Aufsatzkörper umfasst, in die der Kopf des Lichtbogenschweißbrenners derart eintauchbar ist, dass der Lichtbogen im Betrieb innerhalb der sacklochartigen Vertiefung brennt.
5. Wärmekopfaufsatz nach einer der Ausführungsformen 1 bis 4, wobei der Aufsatzkörper mindestens einen Gasauslasskanal aufweist, mit dem Schutzgas des Lichtbogenschweißbrenners aus der sacklochartigen Vertiefung nach außen abgeleitet werden kann.
6. Wärmekopfaufsatz nach einer der Ausführungsformen 1 bis 5, wobei der Aufsatzkörper einen Kühlmedieneinlass und einen Kühlmedienauslass für ein Kühlmedium aufweist sowie ein Kühlmedien-Leitungssystem, das den Kühlmedieneinlass mit dem Kühlmedienauslass durchströmbar verbindet
7. Wärmekopfaufsatz nach einer der Ausführungsformen 1 bis 6, wobei der Aufsatzkörper einen Kühlbereich aufweist, in dem das Kühlmedien-Leitungssystem angeordnet ist, und einen vom Kühlbereich getrennten Lichtbogenbereich, in dem im Betrieb der Lichtbogen zwischen der Elektrode des Lichtbogenschweißbrenners und dem Aufsatzkörper brennt, wobei der Kühlbereich und der Lichtbogenbereich thermisch gekoppelt sind.
8. Wärmekopfaufsatz nach einer der Ausführungsformen 1 bis 7, wobei in den Wärmekopfaufsatz, vorzugsweise in den Aufsatzkörper, insbesondere im Bereich der Kontaktfläche, ein Temperatursensor integriert ist.
9. Wärmekopfaufsatz nach einer der Ausführungsformen 1 bis 8, wobei der Aufsatzkörper an der Kontaktfläche Montagemittel, beispielsweise Gewindebohrungen, zur Montage einer auswechselbaren Verschleißplatte aufweist.
10. System zum Lösen einer Klebeverbindung zwischen Bauteilen, mit einem Lichtbogenschweißbrenner, insbesondere WIG-Brenner, und mit einem an den Lichtbogenschweißbrenner angepassten Wärmekopfaufsatz nach einer der Ausführungsformen 1 bis 9.
11. System nach Ausführungsform 10, wobei der Lichtbogenschweißbrenner so mit dem Wärmekopfaufsatz gekoppelt ist, dass der Kopf des Lichtbogenschweißbrenners in die Aufnahme des Wärmekopfaufsatzes aufgenommen ist.
12. System nach Ausführungsform 10 oder 11, wobei der Kopf des Lichtbogenschweißbrenners eine derart ausgebildete Schutzgasdüse aufweist, so dass, wenn der Kopf des Lichtbogenschweißbrenners in der Aufnahme des Aufsatzkörpers aufgenommen ist, der Lichtbogen durch die Schutzgasdüse und den Aufsatzkörper nach außen abgeschirmt wird.
13. System nach einer der Ausführungsformen 10 bis 12, wobei der Lichtbogenschweißbrenner eine an dem Kühlmedieneinlass des Aufsatzkörpers anschließbare Kühlmedienzuleitung und eine an dem Kühlmedienauslass des Aufsatzkörpers anschließbare Kühlmedienabführung aufweist.
14. System nach einer der Ausführungsformen 10 bis 13, wobei der Lichtbogenschweißbrenner eine elektrische Leitung für die Gegenelektrode der Elektrode des Lichtbogenschweißbrenners aufweist und die elektrische Leitung mit dem elektrisch leitfähigen Bereich des Aufsatzkörpers elektrisch verbindbar oder verbunden ist.
15. System einer der Ausführungsformen 10 bis 14, wobei das System weiterhin eine Steuerungseinrichtung aufweist, die dazu eingerichtet ist, den Lichtbogenstrom des Lichtbogenschweißbrenners zu steuern, insbesondere als Funktion einer Benutzereingabe an einer Benutzerschnittstelle.
16. System nach Ausführungsform 15, wobei die Steuerungseinrichtung dazu eingerichtet ist, den Schweißstrom abhängig von einem mittels eines in den Wärmekopfaufsatz integrierten Temperatursensors gemessenen Temperaturwerts zu steuern, insbesondere um die Temperatur des Aufsatzkörpers zu regeln.
17. System nach Ausführungsform 15 oder 16, wobei die Steuerungseinrichtung dazu eingerichtet ist, die Temperatur des Aufsatzkörpers entsprechend eines ausgewählten Temperaturverlaufsprogramms zu regeln.
18. Verfahren zum Lösen einer Klebeverbindung zwischen Bauteilen mittels eines Systems nach einer der Ausführungsformen 10 bis 17,
   - bei dem der Kopf des Lichtbogenschweißbrenners in die Aufnahme des Aufsatzkörpers eingeführt wird,
   - bei dem zwischen der Elektrode des Lichtbogenschweißbrenners und dem Aufsatzkörper ein Lichtbogen gezündet und aufrechterhalten wird und
   - bei dem die Kontaktfläche mit einem ersten Bauteil, das mittels einer Kleberschicht mit einem zweiten Bauteil verklebt ist, in thermischen Kontakt gebracht wird, um die Klebeverbindung zu lösen.

Weitere Vorteile und Merkmale des Wärmekopfaufsatzes, des Systems und des Verfahrens sind der nachfolgenden Beschreibung eines Ausführungsbeispiels zu entnehmen, wobei auf die beigefügte Zeichnung Bezug genommen wird.

In der Zeichnung zeigen
- Fig. 1: ein Ausführungsbeispiel des Wärmekopfaufsatzes und des Systems in Schnittdarstellung,
- Fig.2: den Wärmekopfaufsatz und das System aus Fig. 1 in perspektivischer Vorderansicht,
- Fig. 3: den Wärmekopfaufsatz und das System aus Fig. 1 in Seitenansicht und
- Fig. 4: ein Ausführungsbeispiel des Verfahrens.

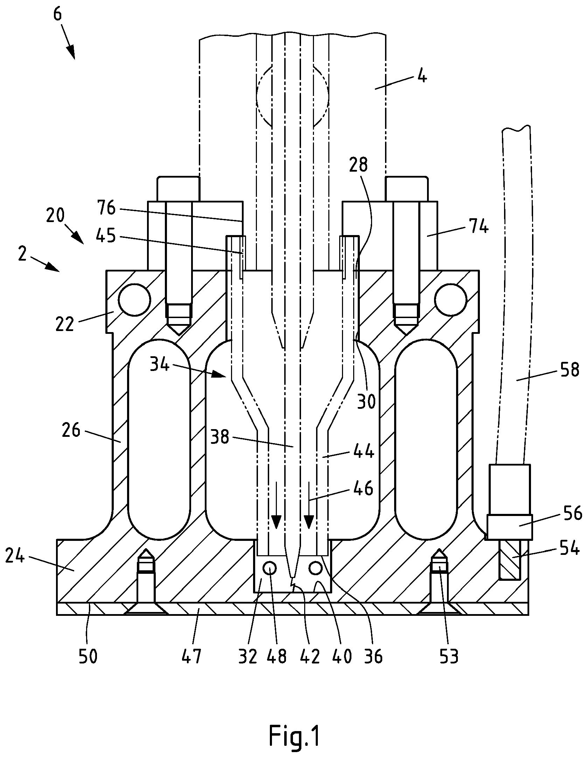

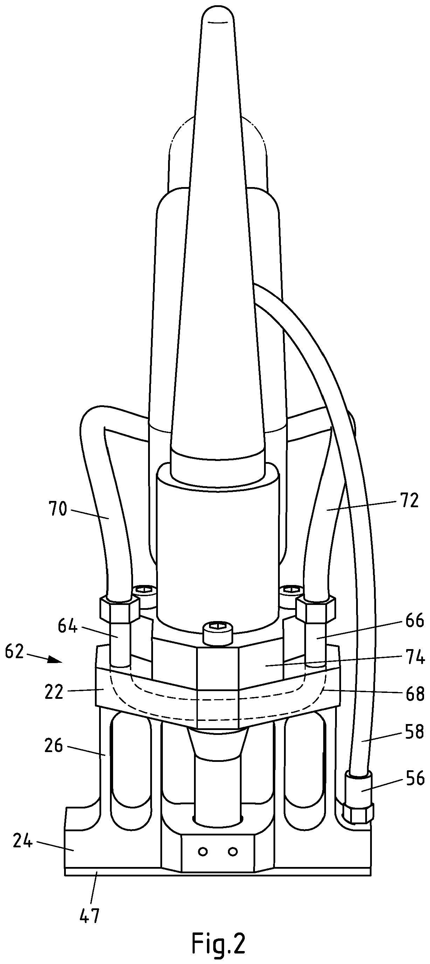

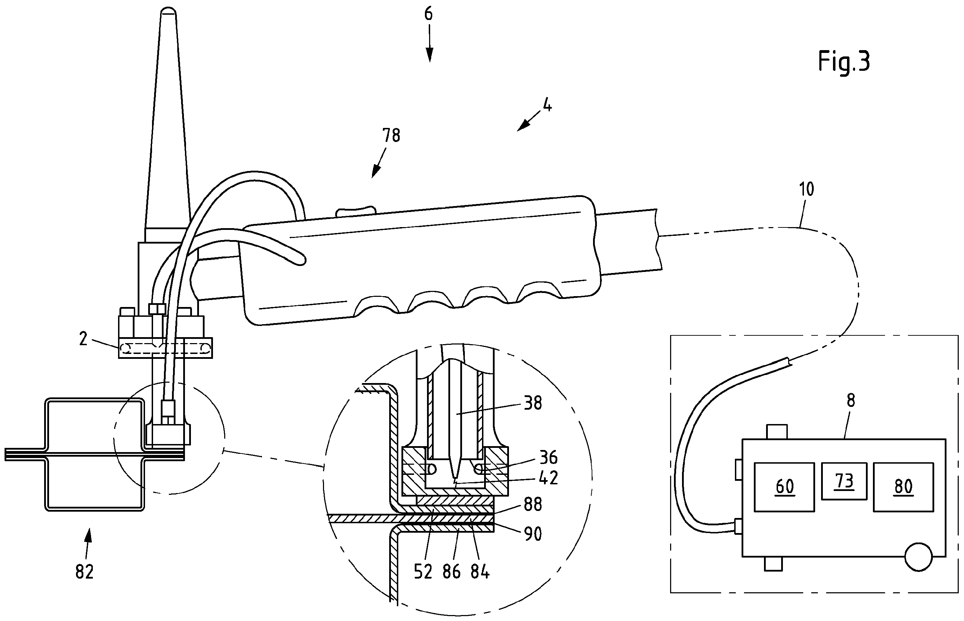

Die Fig. 1-3 zeigen ein Ausführungsbeispiel des Wärmekopfaufsatzes und des Systems, und zwar in Schnittansicht (Fig. 1), in perspektivischer Vorderansicht (Fig. 2) und in Seitenansicht (Fig. 3).

Der Wärmekopfaufsatz 2 ist für einen Lichtbogenschweißbrenner 4 vorgesehen. Zusammen bilden der Wärmekopfaufsatz 2 und der Lichtbogenschweißbrenner 4 das System 6. In Fig. 1 sind die Teile des Lichtbogenschweißbrenners 4 zur besseren Unterscheidung vom Wärmekopfaufsatz 2 doppelstrichpunktiert dargestellt. Das System 6 kann zusätzlich auch noch eine Schweißstromquelle 8 umfassen, an der der Lichtbogenschweißbrenner 4 über ein Schlauchpaket 10 angeschlossen werden kann bzw. angeschlossen ist (vgl. Fig. 3).

Der Wärmekopfaufsatz 2 weist einen Aufsatzkörper 20 aus Kupfer mit einem oberen Bereich 22 und einen unteren Bereich 24 auf, der über Rippen 26 mit dem oberen Bereich 22 verbunden ist. Der Aufsatzkörper weist weiterhin eine Aufnahme 28 auf, die eine durchgehende Bohrung 30 durch den oberen Bereich 22 und eine sacklochartige Vertiefung 32 in Form einer Sacklochbohrung im unteren Bereich 24 umfasst.

Die Aufnahme 28 ist so dimensioniert, dass der Kopf 34 des Lichtbogenschweißbrenners 4 in die Aufnahme 28 hineingeführt werden kann. Mit anderen Worten ist die Aufnahme 28 dazu eingerichtet, den Kopf 34 des Lichtbogenschweißbrenners 4 aufzunehmen.

Der Kopf 34 des Lichtbogenschweißbrenners 4 kann so weit in die Aufnahme 28 eingeführt werden, dass das vordere Ende 36 des Kopfes 34 in die Sacklochbohrung 32 eintaucht. In dieser Position ist die Elektrode 38 des Lichtbogenschweißbrenners 4 gegenüber dem Vertiefungsgrund 40 der Sacklochbohrung 32 angeordnet. Durch Anlegen einer Hochfrequenz-Zündspannung zwischen der Elektrode 38 und dem Aufsatzkörper 20 oder durch kurzzeitige Kontaktierung der Elektrode 38 und des Aufsatzkörpers 20 kann auf diese Weise ein Lichtbogen 42 zwischen der Elektrode 38 und dem Vertiefungsgrund 40 gezündet und aufrecht erhalten werden. Dadurch dass der Lichtbogen 42 innerhalb der Sacklochbohrung 32 brennt, wird verhindert, dass UV-Strahlung des Lichtbogens 42 nach außen dringt.

Der Kopf 34 des Lichtbogenschweißbrenners 4 umfasst vorzugsweise eine die Elektrode 38 umgebende Schutzgasdüse 44, die mittels einer Gewindeverbindung 45 mit dem übrigen Lichtbogenschweißbrenners 4 verschraubt ist. Durch die Schutzgasdüse 44 wird im Betrieb des Lichtbogenschweißbrenners 4 ein Schutzgas 46 zum vorderen Ende der Elektrode 38 geführt. In Kombination mit der Sacklochbohrung 32 hat die Schutzgasdüse 44 den vorteilhaften Effekt, dass die UV-Strahlung des Lichtbogens 42 auch nach oben abgeschirmt wird. Insbesondere kann die Sacklochbohrung 32 praktisch vollständig durch die Schutzgasdüse 44 abgedeckt werden, so dass keine UV-Strahlung des Lichtbogens 42 nach außen gelangen kann. Dadurch kann das System 6 auch ohne Schweißschutzbrille betrieben werden.

Um das vom Lichtbogenschweißbrenner 4 während des Betriebs in die Sacklochbohrung 32 einströmende Schutzgas 46 aus der Sacklochbohrung 32 abführen zu können, sind im Aufsatzkörper 20 zwei Gasauslasskanäle 48 vorgesehen, die das Schutzgas 46 aus der Sacklochbohrung 32 und aus dem Aufsatzkörper 20 herausleiten.

Auf der der Bohrung 30 gegenüber liegenden Seite des Aufsatzkörpers 20 ist eine Kontaktfläche 50 zum Aufsetzen des Wärmekopfaufsatzes 2 auf ein Bauteil 52 vorgesehen. An der Kontaktfläche 50 sind Gewindebohrungen 53 vorgesehen, so dass eine austauschbare Verschleißplatte 47 an der Kontaktfläche 50 an den Aufsatzkörper 20 geschraubt werden kann. Auf diese Weise kommt die Kontaktfläche 50 selbst beim Aufsetzen des Aufsatzkörpers 20 auf das Bauteil 52 nicht in direkten Kontakt mit dem Bauteil 52, so dass der Verschleiß des Aufsatzkörpers 20 reduziert werden kann.

In den Aufsatzkörper 20 ist im Bereich der Kontaktfläche 50 ein Temperatursensor 54 integriert, beispielsweise ein Pt1000-Sensor, mit dem die Temperatur des Aufsatzkörpers 20 im Bereich der Kontaktfläche 50 bestimmt werden kann. Der Temperatursensor 54 ist mit einer am Aufsatzkörpers 20 vorgesehenen Steckerbuchse elektrisch verbunden. Am Lichtbogenschweißbrenner 4 ist ein Kabel 58 mit einem zu der Steckerbuchse korrespondierenden Stecker 56 vorgesehen. Durch Einstecken des Steckers 56 in die Steckerbuchse kann der Temperatursensor 54 über das Kabel 58 mit der Schweißstromquelle 8 und insbesondere mit einer in die Schweißstromquelle 8 integrierten Steuerungseinrichtung 60 elektrisch verbunden werden, so dass die Steuerungseinrichtung über den Temperatursensor 54 Temperaturwerte für die Temperatur des Aufsatzkörpers 20 im Bereich der Kontaktfläche 50 messen kann. Das Kabel 58 kann beispielsweise zusammen mit den sonstigen Versorgungsleitungen des Lichtbogenschweißbrenners 4 im Schlauchpaket 10 geführt werden.

Im oberen Bereich 22 des Aufsatzkörpers 20 ist ein Kühlsystem 62 mit einem Kühlmedieneinlass 64, einem Kühlmedienauslass 66 und einem Kühlmedien-Leitungssystem 68 vorgesehen, das den Kühlmedieneinlass 64 mit dem Kühlmedienauslass 66 durchströmbar verbindet. Da das Kühlmedien-Leitungssystem 68 nur im oberen Bereich 22 angeordnet ist, wird ein ausreichender Abstand zur Sacklochbohrung 32 und damit zu dem im Betrieb in der Sacklochbohrung 32 brennenden Lichtbogen 42 sichergestellt. Dadurch kann eine Überhitzung des im Kühlmedien-Leitungssystem 68 geführten Kühlmediums (z.B. Wasser) verhindert werden. Entsprechend wird der obere Bereich 22 als Kühlbereich und der untere Bereich 24 als Lichtbogenbereich bezeichnet. Durch die Rippen 26 ist der Kühlbereich 22 thermisch mit dem Lichtbogenbereich 24 verbunden, so dass der Lichtbogenbereich 24, insbesondere der Bereich der Kontaktfläche 50 mit dem Kühlsystem 62 gekühlt werden kann. Das Kühlsystem 62 stellt damit eine indirekte Kühlung für den Lichtbogenbereich 24 bzw. für den Bereich der Kontaktfläche 50 dar.

Am Lichtbogenschweißbrenner 4 sind eine Kühlmedienzuleitung 70 und eine Kühlmedienabführung 72 angeordnet, die an dem Kühlmedieneinlass 64 bzw. Kühlmedienauslass 66 anschließbar sind. Die Kühlmedienzuleitung 70 und die Kühlmedienabführung 72 sind mit einer in die Schweißstromquelle 8 integrierten Kühlmedienversorgung 73 verbunden, mit der ein Kühlmedium über die Kühlmedienzuleitung 70 zum Kühlmedieneinlass 64, durch das Kühlmedien-Leitungssystem 68 zum Kühlmedienauslass 66 und wieder durch die Kühlmedienabführung 72 zurück zur Kühlmedienversorgung gepumpt werden kann. Die Kühlmedienzuleitung 70 und die Kühlmedienabführung 72 können beispielsweise ebenfalls im Schlauchpaket 10 geführt werden.

Die Kühlmedienzuleitung 70 und die Kühlmedienabführung 72 sind vorliegend als Strom-Wasser-Kabel ausgebildet und elektrisch mit den beiden elektrischen Polen der Schweißstromquelle 8 verbunden, so dass über die Kühlmedienzuleitung 70 und die Kühlmedienabführung 72 sowohl die Elektrode 38 als auch der als Gegenelektrode wirkende Aufsatzkörper 20 elektrisch mit dem jeweiligen elektrischen Pol der Schweißstromquelle 8 verbunden werden können, ohne dass zusätzliche elektrische Leitungen erforderlich sind. Beispielsweise kann die Kühlmedienzuleitung 70 mit dem elektrischen Pol für die Elektrode und die Kühlmedienabführung 72 mit dem elektrischen Pol für die Gegenelektrode verbunden sein. Die Kühlmedienzuleitung 70 weist in diesem Fall noch eine galvanische Trennung auf, beispielsweise einen nichtleitenden Kunststoffabschnitt, um den Aufsatzkörper 20 vom Elektrodenpotential zu trennen.

Um den Wärmekopfaufsatz 2 am Lichtbogenschweißbrenner 4 zu befestigen, ist der Aufsatzkörper 20 mit einer Befestigungsplatte 74 aus Kunststoff verschraubt, die form- und kraftschlüssig in eine ringförmige Vertiefung 76 am Lichtbogenschweißbrenner 4 eingreift, die durch die aufgeschraubten Schutzgasdüse 44 am Lichtbogenschweißbrenner 4 vorhanden ist. Mit der Befestigungsplatte 74 kann der Wärmekopfaufsatz 2 somit am Lichtbogenschweißbrenner 4 befestigt werden, ohne dass eine Modifikation des Lichtbogenschweißbrenners 4 erforderlich ist.

Für den Betrieb des Systems 6 wird der Kopf 34 des Lichtbogenschweißbrenners 4 in die Aufnahme 28 eingeführt. Anschließend wird die Befestigungsplatte 74 so über den Lichtbogenschweißbrenner 4 geschoben, dass diese in die ringförmige Vertiefung 76 eingreift, und mit dem Aufsatzkörper 20 verschraubt.

Nach einer Benutzereingabe an einer Benutzerschnittstelle 78 am Lichtbogenschweißbrenner 4, beispielsweise einer Taste, oder an einer Benutzerschnittstelle 80 an der Schweißstromquelle 8 wird zwischen der Elektrode 38 und dem Aufsatzkörper 20 der Lichtbogen 42 gezündet. Die vom Lichtbogen 42 erzeugte Wärme erwärmt den Aufsatzkörper 20, so dass über die Kontaktfläche 50 und eine daran befestigte Verschleißplatte 47 Wärme auf das Bauteil 52 übertragen werden kann, wenn der Aufsatzkörper 20 mit der Verschleißplatte 47 wie in Fig. 3 dargestellt auf das Bauteil 52 aufgesetzt wird.

Um den Aufsatzkörper 20 zu kühlen und eine gezielte Temperaturregelung zu ermöglichen wird während des Betriebs zudem ein Kühlmedium über die Kühlmedienzuleitung 70 durch das Kühlmedien-Leitungssystem 68 geführt.

Die Steuerungseinrichtung 60 der Schweißstromquelle ist vorzugsweise zur Regelung der Temperatur des Aufsatzkörpers 20 im Bereich der Kontaktfläche 50 eingerichtet. Zu diesem Zweck erfasst die Steuerungseinrichtung 60 über den mit dem Kabel 58 mit der Steuerungseinrichtung 60 verbundenen Temperatursensor 54 die Temperatur im Bereich der Kontaktfläche 50 als Regelgröße. Als Steuergröße beeinflusst die Steuerungseinrichtung 60 den Lichtbogenstrom. Zusätzlich oder alternativ kann die Steuerungseinrichtung 60 auch den Fluss oder die Temperatur des Kühlmediums durch das Kühlmedien-Leitungssystem 68 als Steuergröße beeinflussen.

Als Führungsgröße der Regelung dient ein vorgegebener Soll-Temperaturwert, der beispielsweise über die Benutzerschnittstelle 78 am Lichtbogenschweißbrenner 4 oder die Benutzerschnittstelle 80 an der Schweißstromquelle 8 vom Benutzer des Systems 6 eingegeben bzw. ausgewählt werden kann.

Durch diese Regelung kann die Temperatur im Bereich der Kontaktfläche 50 genau eingestellt werden, so dass ein gezielter Wärmeeintrag von der Kontaktfläche 50 in das Bauteil 52 möglich ist.

Mit der Steuerungseinrichtung 60 kann die Temperatur im Bereich der Kontaktfläche auch entsprechend eines vorgegebenen Temperaturverlaufsprogramms geregelt werden. Zu diesem Zweck können in einem Speicher der Steuerungseinrichtung 60 beispielsweise für verschiedene verklebte Bauteile verschiedene Temperaturverlaufsprogramme gespeichert sein, die einen bestimmten Temperaturverlauf im Bereich der Kontaktfläche 50 über die Zeit vorgeben. Mit einem solchen Temperaturverlauf kann der Wärmeeintrag in ein Bauteil genau gesteuert werden.

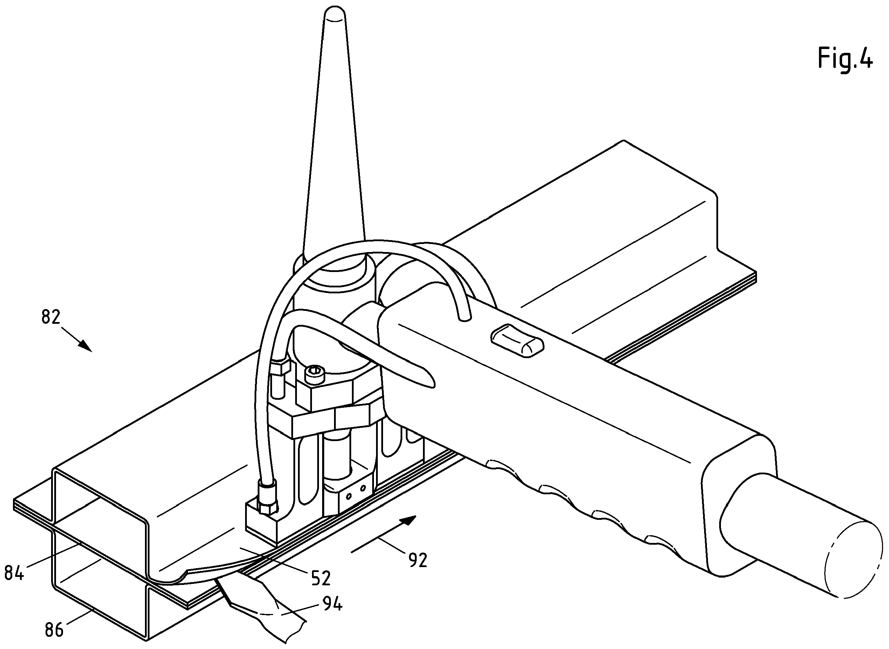

Figur 4 zeigt ein Ausführungsbeispiel des Verfahrens zum Lösen einer Kleberschicht zwischen Bauteilen. In Figur 4 ist ein Bauteilkomplex 82 mit dem halbschalenförmigen Bauteil 52, einem ebenen Bauteil 84 und einem weiteren halbschalenförmiges Bauteil 86 in perspektivischer Ansicht dargestellt. Eine detailliertere Schnittansicht des Bauteilkomplexes 82 ist zudem in dem vergrößerten Ausschnitt in Fig. 3 abgebildet. Das halbschalenförmige Bauteil 52 ist über eine erste Kleberschicht 88 mit dem Bauteil 84 und das Bauteil 84 über eine zweite Kleberschicht 90 mit dem Bauteil 86 verklebt (s. Fig. 3). Die erste Kleberschicht 88 stellt demnach eine erste Klebeverbindung und die zweite Kleberschicht 90 eine zweite Klebeverbindung dar.

Durch Betätigung der Benutzerschnittstelle 78 am Lichtbogenschweißbrenner 4 wird zwischen der Elektrode 38 und dem Aufsatzkörper 20 ein Lichtbogen 42 gezündet, indem die Schweißstromquelle 8 kurzzeitig eine Hochfrequenzspannung zwischen der Elektrode 38 und dem Aufsatzkörper 20 anlegt. Nach der Zündung brennt der Lichtbogen 42 mit dem von der Schweißstromquelle 8 zur Verfügung gestellten Schweißstrom, so dass sich der Aufsatzkörper 20 erwärmt. Gleichzeitig erfolgt auch eine indirekte Kühlung über das Kühlsystem 62.

Die Steuerungseinrichtung 60 regelt die Temperatur im Bereich der Kontaktfläche 50 auf eine vom Benutzer über die Benutzerschnittstelle 78 oder 80 für das Bauteil 52 ausgewählte Soll-Temperatur ein. Sobald die Soll-Temperatur im Bereich der Kontaktfläche 50 erreicht ist, veranlasst die Steuerungseinrichtung 60 die Ausgabe einer Benutzerinformation über die Benutzerschnittstelle 78 oder 80, beispielsweise über ein in die Benutzerschnittstelle 78 oder 80 integriertes LCD-Display. Zusätzlich kann die Steuerungseinrichtung 60 auch die mit dem Temperatursensor 54 gemessene Temperatur über die Benutzerschnittstelle 78 oder 80 ausgeben lassen.

Der Aufsatzkörper 20 wird dann mit der Kontaktfläche 50 bzw. der Verschleißplatte 47 auf den verklebten Bereich des Bauteils 52 aufgesetzt und langsam am Klebebereich entlang bewegt (vgl. Pfeil 92).

Durch die präzise Temperaturregelung im Bereich der Kontaktfläche 50 und die damit verbundene präzise Wärmeeintragsregelung in das Bauteil 52, auf das der Aufsatzkörper 20 aufgesetzt ist, wird die erste Kleberschicht 88 gelöst, ohne die darunter liegende zweite Kleberschicht 90 zu beschädigen. Das Ablösen des Bauteils 52 kann mit einem zusätzlichen Werkzeug 94 mechanisch unterstützt werden.

Auf diese Weise kann das Bauteil 52 prozesssicher, zuverlässig und relativ einfach von dem Bauteilkomplex 82 gelöst werden, ohne die übrigen Klebeverbindungen des Bauteilkomplexes 82 wie die zweite Kleberschicht 90 zu beschädigen. Dies erlaubt die Demontage und damit die Reparatur oder den Austausch einzelner Bauteile aus geklebten Bauteilkomplexen.

## Patentansprüche

1. Wärmekopfaufsatz (2) für einen Lichtbogenschweißbrenner (4), insbesondere für einen WIG-Schweißbrenner, zum Lösen einer Klebeverbindung (88) zwischen Bauteilen (52, 84),
- mit einem Aufsatzkörper (20),
- wobei der Aufsatzkörper (20) eine Aufnahme (28) aufweist, die dazu eingerichtet ist, den Kopf (34) eines Lichtbogenschweißbrenners (4) derart aufzunehmen, dass zwischen der Elektrode (38) des Lichtbogenschweißbrenners (4) und einem elektrisch leitfähigen Bereich (40) des Aufsatzkörpers (20) ein Lichtbogen (42) gezündet und aufrecht erhalten werden kann, und
- wobei der Aufsatzkörper (20) eine Kontaktfläche (50) zum Aufsetzen auf ein Bauteil (52) aufweist, die derart angeordnet ist, um von dem Lichtbogen (42) erzeugte Wärme über den Aufsatzkörper (20) auf das Bauteil (52) zu übertragen.

2. Wärmekopfaufsatz nach Anspruch 1,
**dadurch gekennzeichnet, dass** der Aufsatzkörper (20) als Metallblock, insbesondere aus Kupfer, ausgebildet ist.

3. Wärmekopfaufsatz nach Anspruch 1 oder 2,
**dadurch gekennzeichnet, dass** die Aufnahme (28) eine sacklochartige Vertiefung (32) im Aufsatzkörper (20) umfasst, in die der Kopf (34) des Lichtbogenschweißbrenners (4) derart eintauchbar ist, dass der Lichtbogen (42) im Betrieb innerhalb der sacklochartigen Vertiefung (32) brennt.

4. Wärmekopfaufsatz nach einem der Ansprüche 1 bis 3,
**dadurch gekennzeichnet, dass** der Aufsatzkörper (20) mindestens einen Gasauslasskanal (48) aufweist, mit dem Schutzgas (46) des Lichtbogenschweißbrenners (4) aus der sacklochartigen Vertiefung (32) nach außen abgeleitet werden kann.

5. Wärmekopfaufsatz nach einem der Ansprüche 1 bis 4,
**dadurch gekennzeichnet, dass** der Aufsatzkörper (20) einen Kühlmedieneinlass (64) und einen Kühlmedienauslass (66) für ein Kühlmedium aufweist sowie ein Kühlmedien-Leitungssystem (68), das den Kühlmedieneinlass (64) mit dem Kühlmedienauslass (66) durchströmbar verbindet, und
dass der Aufsatzkörper (20) einen Kühlbereich (22) aufweist, in dem das Kühlmedien-Leitungssystem (68) angeordnet ist, und einen vom Kühlbereich (22) getrennten Lichtbogenbereich (24), in dem im Betrieb der Lichtbogen (42) zwischen der Elektrode (38) des Lichtbogenschweißbrenners (4) und dem Aufsatzkörper (20) brennt, wobei der Kühlbereich (22) und der Lichtbogenbereich (24) thermisch gekoppelt sind.

6. Wärmekopfaufsatz nach einem der Ansprüche 1 bis 5,
**dadurch gekennzeichnet, dass** der Aufsatzkörper (20) an der Kontaktfläche (50) Montagemittel (53), beispielsweise Gewindebohrungen, zur Montage einer auswechselbaren Verschleißplatte (47) aufweist.

7. System (6) zum Lösen einer Klebeverbindung (88) zwischen Bauteilen (52, 84),
- mit einem Lichtbogenschweißbrenner (4), insbesondere WIG-Brenner, und
- mit einem an den Lichtbogenschweißbrenner (4) angepassten Wärmekopfaufsatz (2) nach einem der Ansprüche 1 bis 6.

8. System nach Anspruch 7,
**dadurch gekennzeichnet, dass** der Lichtbogenschweißbrenner (4) so mit dem Wärmekopfaufsatz (2) gekoppelt ist, dass der Kopf (34) des Lichtbogenschweißbrenners (4) in die Aufnahme (28) des Wärmekopfaufsatzes (2) aufgenommen ist.

9. System nach Anspruch 7 oder 8,
**dadurch gekennzeichnet, dass** der Kopf (34) des Lichtbogenschweißbrenners (4) eine derart ausgebildete Schutzgasdüse (44) aufweist, so dass, wenn der Kopf (34) des Lichtbogenschweißbrenners (4) in der Aufnahme (28) des Aufsatzkörpers (20) aufgenommen ist, der Lichtbogen (34) durch die Schutzgasdüse (44) und den Aufsatzkörper (20) nach außen abgeschirmt wird.

10. System nach einem der Ansprüche 7 bis 9,
**dadurch gekennzeichnet, dass** der Lichtbogenschweißbrenner (4) eine an dem Kühlmedieneinlass (64) des Aufsatzkörpers (20) anschließbare Kühlmedienzuleitung (70) und eine an dem Kühlmedienauslass (66) des Aufsatzkörpers (20) anschließbare Kühlmedienabführung (72) aufweist.

11. System nach einem der Ansprüche 7 bis 10,
**dadurch gekennzeichnet, dass** der Lichtbogenschweißbrenner (4) eine elektrische Leitung (70, 72) für die Gegenelektrode der Elektrode (38) des Lichtbogenschweißbrenners (4) aufweist und die elektrische Leitung mit dem elektrisch leitfähigen Bereich (40) des Aufsatzkörpers (20) elektrisch verbindbar oder verbunden ist.

12. System einem der Ansprüche 7 bis 11,
**dadurch gekennzeichnet, dass** das System (6) weiterhin eine Steuerungseinrichtung (60) aufweist, die dazu eingerichtet ist, den Lichtbogenstrom des Lichtbogenschweißbrenners (4) zu steuern, insbesondere als Funktion einer Benutzereingabe an einer Benutzerschnittstelle (78, 80).

13. System nach Anspruch 12,
**dadurch gekennzeichnet, dass** die Steuerungseinrichtung (60) dazu eingerichtet ist, den Schweißstrom abhängig von einem mittels eines in den Wärmekopfaufsatz (20) integrierten Temperatursensors (54) gemessenen Temperaturwerts zu steuern, insbesondere um die Temperatur des Aufsatzkörpers (20) zu regeln.

14. System nach Anspruch 12 oder 13,
**dadurch gekennzeichnet, dass** die Steuerungseinrichtung (60) dazu eingerichtet ist, die Temperatur des Aufsatzkörpers (20) entsprechend eines ausgewählten Temperaturverlaufsprogramms zu regeln.

15. Verfahren zum Lösen einer Klebeverbindung (88) zwischen Bauteilen (52, 84) mittels eines Systems (6) nach einem der Ansprüche 7 bis 14,
- bei dem der Kopf des Lichtbogenschweißbrenners (4) in die Aufnahme (28) des Aufsatzkörpers (20) eingeführt wird,
- bei dem zwischen der Elektrode (38) des Lichtbogenschweißbrenners (4) und dem Aufsatzkörper (20) ein Lichtbogen (42) gezündet und aufrechterhalten wird und
- bei dem die Kontaktfläche (50) mit einem ersten Bauteil (52), das mittels einer Kleberschicht (88) mit einem zweiten Bauteil (84) verklebt ist, in thermischen Kontakt gebracht wird, um die Klebeverbindung (88) zu lösen.
